# DEMANDE DE BREVET EUROPEEN

(11) **EP 1 378 720 A2**
(43) Date de publication de la demande: **07.01.2004**
(21) Numéro de dépôt: 03015017.1
(22) Date de dépôt: 02.07.2003
(51) Int. Cl.: F28F 9/00, B60K 11/04

(54) **Equipement et procédé de montage d'un échangeur de chaleur, notamment pour véhicule automobile**

(30) Priorité: 04.07.2002 FR 0208388
(71) Demandeur: VALEO CLIMATISATION, 78321 La Verrière (FR)
(72) Inventeur: Scalone, Orlando, 95100 Argenteuil (FR)

(57) **Abrégé**

L'invention concerne un équipement et un procédé pour le montage d'un échangeur de chaleur (36) dans un boîtier (10) délimité par des parois (18, 19, 20, 22) et agencé pour être traversé par un flux d'air. L'équipement comprend une pièce adaptatrice (50) agencée pour être interposée entre l'échangeur de chaleur (36) et les parois du boîtier, pour rattraper un écart dimensionnel avec un autre échangeur de chaleur. On peut ainsi placer dans un même boîtier (10) soit directement un échangeur de chaleur d'un premier type, soit directement un échangeur de chaleur (36) d'un second type, avec interposition de la pièce adaptatrice (50). Application notamment aux véhicules automobiles.

## Description

L'invention se rapporte aux échangeurs de chaleur, notamment pour véhicules automobiles.

Elle concerne plus particulièrement un équipement et un procédé pour le montage d'un échangeur de chaleur dans un boîtier, le boîtier étant délimité par des parois et étant agencé pour être traversé par un flux d'air.

Un tel boîtier est utilisé notamment dans les appareils de chauffage et/ou de climatisation des véhicules automobiles. Les parois du boîtier contribuent à délimiter un conduit pour acheminer un flux d'air dans l'habitacle du véhicule automobile sous l'action d'un pulseur d'air.

Dans ce boîtier, est logé habituellement un radiateur, encore appelé "aérotherme", agencé pour chauffer un flux d'air qui est envoyé dans l'habitacle.

Lorsque le véhicule automobile est, en outre, équipé de l'option climatisation, le boîtier loge aussi un évaporateur, lequel est généralement placé en amont du radiateur de chauffage par rapport au sens de circulation du flux d'air.

Dans la plupart des véhicules automobiles, le boîtier est formé de deux coquilles assemblées mutuellement.

De façon classique, le montage de l'échangeur de chaleur, qu'il s'agisse d'un radiateur de chauffage ou d'un évaporateur de climatisation, s'effectue à partir d'une ouverture dans une paroi du boîtier pour permettre un montage en tiroir.

Un tel montage facilite non seulement la mise en place de l'échangeur de chaleur sur les chaînes de fabrication, mais aussi pour la maintenance de l'échangeur de chaleur et son remplacement éventuel.

Un tel échangeur de chaleur comprend habituellement un corps, généralement un faisceau de tubes et d'ailettes, relié à au moins une boîte collectrice.

Lorsque l'échangeur de chaleur est mis en place dans le boîtier, le flux d'air balaye le corps de l'échangeur pour être réchauffé ou refroidi selon la nature de l'échangeur de chaleur.

Une fois mis en place dans le boîtier, l'échangeur de chaleur doit être traversé entièrement par le flux d'air, sans créer de fuites d'air parasites entre l'échangeur de chaleur et les parois du boîtier.

Or, les constructeurs de véhicules automobiles se trouvent souvent confrontés au problème de pouvoir monter des échangeurs de chaleur d'origine et/ou de structure différentes dans un boîtier d'un type donné.

Ceci peut être lié à des problèmes d'approvisionnement ou encore au fait qu'un même boîtier peut servir à des versions différentes d'un même véhicule.

On connaît notamment des échangeurs de chaleur, appelés aussi "échangeurs brasés" qui sont essentiellement obtenus par brasage de composants en aluminium ou alliages d'aluminium. De tels échangeurs de chaleur comprennent habituellement un faisceau de tubes plats et d'intercalaires ondulés dont une extrémité au moins est reliée à une boîte çollectrice, l'ensemble des composants étant brasé lors d'une même opération.

On connaît par ailleurs des échangeurs de chaleur, appelés aussi "échangeurs mécaniques", dans lesquels les tubes du faisceau sont assemblés à une ou deux boîtes collectrices par des moyens mécaniques. Généralement, le faisceau est composé de tubes qui traversent des ailettes planes. Il peut s'agir de tubes parallèles reçus dans deux boîtes collectrices ou bien encore de tubes en épingle dont les extrémités sont reçues dans une seule boîte collectrice.

Habituellement, les échangeurs du premier type ci-dessus (échangeurs brasés) ont un encombrement plus grand que les échangeurs de chaleur du deuxième type (échangeurs mécaniques) dans au moins une dimension.

Ceci oblige, dans la pratique, à disposer'de deux types de boîtiers convenant respectivement aux échangeurs de chaleur du premier type et aux échangeurs de chaleur du second type.

L'invention a notamment pour but de surmonter les inconvénients précités.

Elle vise en particulier à procurer un équipement et un procédé permettant le montage de différents types d'échangeurs de chaleur dans un même boîtier, afin d'éviter d'avoir à disposer de boîtiers différents.

L'invention propose à cet effet un équipement de montage du type défini précédemment, lequel comprend une pièce adaptatrice agencée pour être interposée entre l'échangeur de chaleur et les parois du boîtier pour rattraper un écart dimensionnel.

Dans ces conditions, un même boîtier peut recevoir soit directement un échangeur de chaleur d'un premier type, soit indirectement un échangeur de chaleur d'un deuxième type, celui-ci étant muni de la pièce adaptatrice.

Avantageusement, la pièce adaptatrice comprend un cadre de forme générale rectangulaire ayant deux faces latérales réunies par deux traverses pour délimiter deux faces ouvertes pour le passage du flux d'air au travers de l'échangeur de chaleur.

Dans une forme de réalisation préférée, l'une des faces latérales, encore appelée face d'introduction, est ouverte, tandis que l'autre face latérale, encore appelée face de réception, est au moins en partie fermée, ce qui permet un montage en tiroir de l'échangeur de chaleur dans la pièce adaptatrice.

En variante, il est possible aussi de mettre en place l'échangeur de chaleur par l'une des faces ouvertes de la pièce adaptatrice.

La face de réception précitée peut comprendre au moins une ouverture pour le passage d'une partie au moins d'une extrémité d'échangeur de chaleur.

Ainsi, dans une application particulière, cette face de réception comprend une série d'ouvertures alignées, agencées pour recevoir les coudes en U de tubes en épingle de l'échangeur de chaleur.

L'équipement de montage comprend avantageusement des moyens de fixation de l'échangeur de chaleur sur la pièce adaptatrice.

Ainsi, l'échangeur de chaleur et la pièce adaptatrice forment un tout, qui peut être ensuite mis en place dans le boîtier.

Sous un autre aspect, l'invention concerne un procédé de montage d'un échangeur de chaleur dans un boîtier délimité par des parois qui définissent un passage d'air, ce procédé comprenant l'opération consistant à interposer, en cas de besoin, une pièce adaptatrice telle que définie précédemment entre l'échangeur de chaleur et les parois du boîtier pour rattraper un écart dimensionnel.

Dans un mode de réalisation préféré de l'invention, le procédé comprend les opérations suivantes :
a) prévoir des échangeurs de chaleur d'un premier type et des échangeurs de chaleur d'un second type conçus pour être placés indifféremment dans le boîtier, les échangeurs de chaleur du premier type ayant un encombrement supérieur aux échangeurs de chaleur du second type, dans au moins une dimension ;
b) prévoir des pièces adaptatrices convenant aux échangeurs de chaleur du second type pour rattraper l'écart dimensionnel avec les échangeurs de chaleur du premier type ;
c) mettre en place dans le boîtier :
   c1) soit un échangeur de chaleur du premier type reçu directement dans le boîtier ;
   c2) soit un échangeur de chaleur du second type avec interposition d'une pièce adaptatrice entre l'échangeur de chaleur et le boîtier pour rattraper l'écart dimensionnel.

Avantageusement, l'opération c2) comprend la mise en place de la pièce adaptatrice autour de l'échangeur de chaleur avant mise en place de l'ensemble dans le boîtier.

Par ailleurs, l'opération c1) comprend avantageusement la mise en place de l'échangeur de chaleur selon un montage en tiroir. De même, l'opération c2) comprend avantageusement la mise en place de l'échangeur de chaleur et de la pièce adaptatrice selon un montage en tiroir.

Dans la description qui suit, faite seulement à titre d'exemple, on se réfère aux dessins annexés, sur lesquels :
- la Figure 1 est une vue en coupe transversale d'un boîtier distributeur d'un appareil de chauffage et/ou de climatisation d'un véhicule automobile, dans lequel est reçu directement un échangeur de chaleur d'un premier type ;
- la Figure 2 est une vue en coupe transversale du même boîtier que la Figure 1, mais recevant un radiateur d'un second type avec interposition d'une pièce adaptatrice selon l'invention ; et
- la Figure 3 est une vue en perspective de la pièce adaptatrice de la Figure 2.

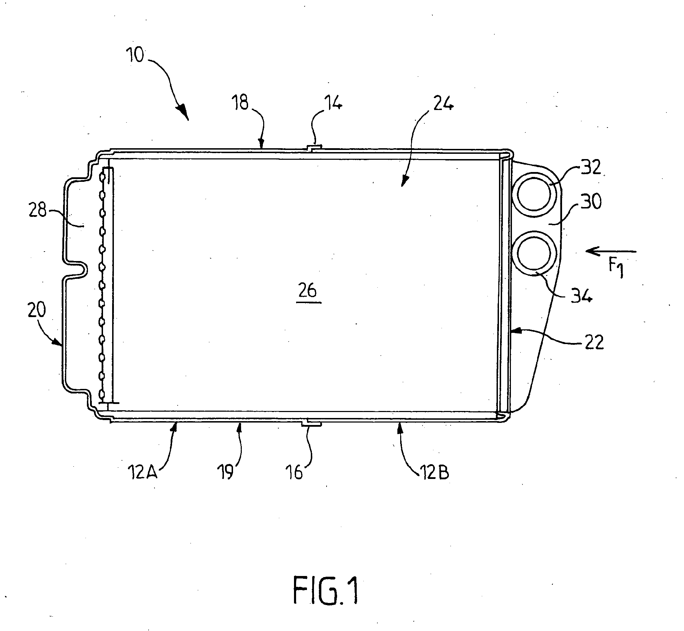

On se réfère tout d'abord à la Figure 1 qui montre, en coupe transversale, un boîtier 10, appelé boîtier de distribution, faisant partie d'un appareil de chauffage et/ou de climatisation d'un véhicule automobile. Ce boîtier est formé par l'assemblage de deux parties de boîtier, une partie 12A et une partie 12B, réunies entre elles par des joints d'assemblage 14 et 16, de façon en soi connue. Les deux parties de boîtier sont avantageusement réalisées par moulage d'une matière plastique.

Ce boîtier a une section transversale de forme générale rectangulaire limitée par une paroi supérieure 18, une paroi inférieure 19, une paroi latérale 20 ( côté gauche de la Figure 1) et une paroi latérale 22 (côté droit de la Figure 1).

A l'intérieur du boîtier, est logé un échangeur de chaleur 24, dans l'exemple un radiateur de chauffage. Ce radiateur est destiné à chauffer un flux d'air qui est mis en mouvement dans le boîtier par un pulseur (non représenté) pour envoyer un flux d'air chauffé dans l'habitacle du véhicule. Ce radiateur comprend un corps 26, par exemple un faisceau de tubes et d'ailettes (non représenté en détail), relié à deux boîtes collectrices : une boîte collectrice 28 située près de la paroi latérale 20 et une boîte collectrice 30 située du côté de la paroi latérale 22. Dans l'exemple, la boîte collectrice 30 fait saillie en dehors de la paroi et elle est munie de deux tubulures 32 et 34 servant à l'admission et à l'évacuation d'un fluide caloporteur, par exemple le liquide de refroidissement du véhicule.

L'échangeur de chaleur 24 est assemblé par un "montage en tiroir" dans la direction de la flèche F1. A cet effet, la paroi latérale 22 possède une ouverture de forme générale rectangulaire (non représentée) par laquelle est introduit l'échangeur de chaleur en faisant d'abord entrer la boîte collectrice 28. En fin de mouvement d'introduction, la boîte collectrice 28 est reçue dans la paroi latérale 20, tandis que la boîte collectrice 30 fait saillie en dehors de la paroi 22, comme montré sur la Figure 1. Les tubulures 32 et 34 peuvent être alors reliées à un circuit de circulation de fluide, de manière en soi connue.

Dans le cas de la Figure 1, l'échangeur de chaleur 24 est avantageusement obtenu par l'assemblage, en une seule opération, de composants en aluminium ou d'alliages à base d'aluminium. Généralement, il s'agit de tubes plats entre lesquels sont placés des intercalaires ondulés'formant ailettes d'échange de chaleur, les extrémités des tubes étant reçues dans les boîtes collectrices 28 et 30. L'échangeur de chaleur 24 constitue ainsi un échangeur d'un premier type (échangeur brasé) qui est reçu directement dans le boîtier 10.

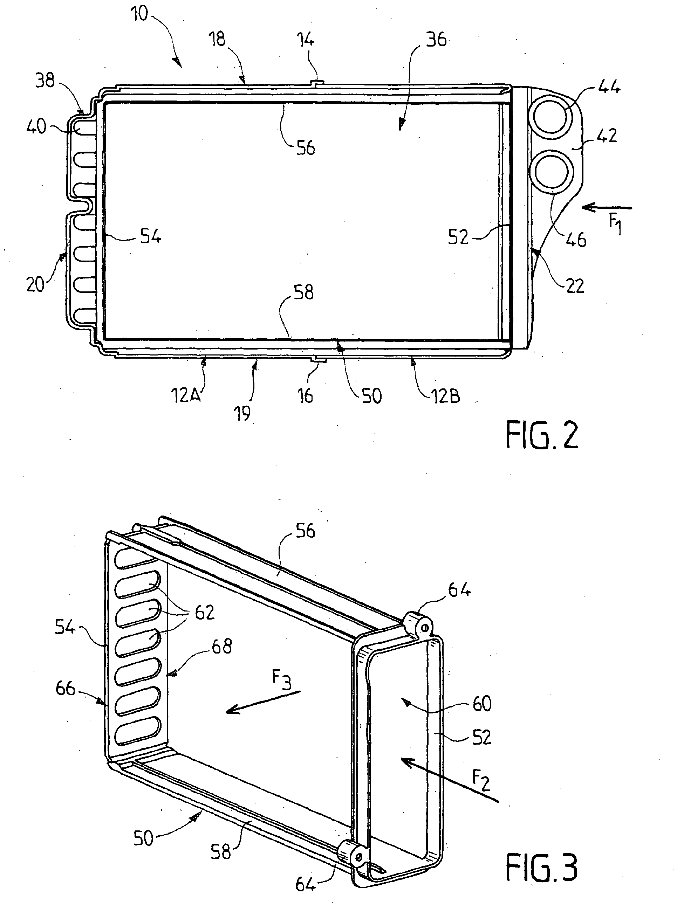

On se réfère maintenant à la Figure 2 dans laquelle le même boîtier 10 reçoit un autre échangeur de chaleur 36, dont l'encombrement dans au moins une dimension est inférieur à celui de l'échangeur 24 de la Figure 1. En particulier, l'échangeur 36 peut être assemblé mécaniquement. Dans l'exemple, il comprend une série de tubes en épingle 38, encore appelés tubes en U, constitués chacun, de manière en soi connue, de deux branches sensiblement parallèles réunies par un coude 40. Les extrémités des branches sont retenues dans une boîte collectrice 42 ayant deux tubulures 44 et 46 pour la circulation du fluide caloporteur. Ce fluide pénètre dans un compartiment (non représenté) de la boîte collectrice 42, parcourt des premières branches des tubes 38 jusqu'aux coudes 40 et retourne ensuite par les secondes branches des tubes en U pour parvenir à un autre compartiment (non représenté) de la boîte collectrice 42.

Comme on peut le voir sur la Figure 2, les coudes 40 sont reçus dans la paroi latérale 20 du boîtier. Comme précédemment, l'échangeur de chaleur est destiné à être assemblé par un montage en tiroir. En fin d'introduction, la boîte collectrice 42 fait saillie en dehors de la paroi latérale 22 pour permettre de relier les tubulures 44 et 46 au circuit de circulation de fluide.

Dans l'exemple, l'échangeur de chaleur 36, qui constitue un échangeur d'un second type (échangeur mécanique), est reçu dans le boîtier 10 avec interposition d'une pièce adaptatrice 50 qui sera décrite maintenant en référence à la Figure 3.

La pièce adaptatrice 50 comprend un cadre de forme générale rectangulaire ayant deux faces latérales : une face 52, dite "face d'introduction", et une face opposée 54, dite "face de réception". Les deux faces latérales 52 et 54 sont réunies entre elles par deux traverses : une traverse supérieure 56 et une traverse inférieure 58. La face 52 est une face couverte délimitant une ouverture 60 de forme générale rectangulaire pour permettre l'introduction, également par un montage en tiroir, de l'échangeur de chaleur 36 (flèche F2).

La face de réception 54 comprend une série d'ouvertures alignées 62 aménagées pour recevoir les coudes 40 des tubes du faisceau, dans l'exemple au nombre de sept. Ainsi, l'échangeur de chaleur 36 est mis en place, par un montage en tiroir, dans la pièce adaptatrice 50 dans la direction de la flèche F2.

Pour cela, on présente l'extrémité de l'échangeur qui correspond aux coudes 40 et on continue le mouvement jusqu'à ce que les coudes 40 des tubes soient reçus respectivement dans les ouvertures 62. En fin de mouvement, la boîte collectrice 42 dépasse vers l'extérieur de la face d'introduction 52.

Cette dernière est munie de deux bossages 64 servant à la fixation mutuelle de l'échangeur de chaleur 36 et de la pièce adaptatrice 50.

On procure ainsi un ensemble dont l'encombrement correspond sensiblement à l'encombrement de l'échangeur de chaleur 24 de la Figure 1. L'ensemble peut alors être monté en tiroir à l'intérieur du boîtier 10, dans les mêmes conditions que l'échangeur de chaleur 24.

Ainsi, un même boîtier 10 peut recevoir, selon le cas, soit directement l'échangeur de chaleur 24 de la Figure 1, soit l'échangeur de chaleur 36 de la Figure 2 avec interposition de la pièce adaptatrice 50.

La pièce adaptatrice 50 est avantageusement réalisée par moulage, de préférence monobloc, d'une matière plastique.

Comme on peut le voir sur la Figure 3, la pièce adaptatrice délimite deux faces ouvertes opposées 66 et 68 qui permettent le passage d'un flux d'air balayant le faisceau de l'échangeur, comme montré par la flèche F3. Dans une variante de réalisation, l'échangeur de chaleur 36 pourrait être monté dans la pièce adaptatrice 50 par l'une ou l'autre des faces ouvertes 66 et 68.

Bien entendu, l'invention n'est pas limitée à la forme de réalisation représentée précédemment et s'étend à d'autres variantes.

On comprendra qu'il est possible aussi de prévoir plus de deux types différents d'échangeurs de chaleur et d'autres types de pièces adaptatrices.

L'invention trouve une application particulière aux échangeurs de chaleur pour véhicules automobiles.

## Revendications

1. Equipement de montage d'un échangeur de chaleur dans un boîtier délimité par des parois et agencé pour être traversé par un flux d'air, **caractérisé en ce qu'**il comprend une pièce adaptatrice (50) agencée pour être interposée entre l'échangeur de chaleur (36) et les parois (18, 20, 22) du boîtier 10 pour rattraper un écart dimensionnel.

2. Equipement de montage selon la revendication 1, **caractérisé en ce que** la pièce adaptatrice (50) comprend un cadre de forme générale rectangulaire ayant deux faces latérales (52, 54) réunies par deux traverses (56, 58) pour délimiter deux faces ouvertes (66, 68) pour le passage du flux d'air au travers de l'échangeur de chaleur (36).

3. Equipement de montage selon la revendication 2, **caractérisé en ce qu'**une des faces latérales (52), appelée face d'introduction, est ouverte, tandis que l'autre face latérale (54), appelée face de réception, est au moins en partie fermée, ce qui permet un montage en tiroir de l'échangeur de chaleur (36) dans la pièce adaptatrice (50).

4. Equipement de montage selon là revendication 3, **caractérisé en ce que** la face de réception (54) comprend au moins une ouverture (62) pour le passage d'une partie au moins d'une extrémité de l'échangeur de chaleur (36).

5. Equipement de montage selon la revendication 4, **caractérisé en ce que** la face de réception (54) comprend une série d'ouvertures (62) alignées et agencées pour recevoir les coudes en U (40) de tubes en épingle (38) de l'échangeur de chaleur (36).

6. Equipement de montage selon l'une des revendications 1 à 5, **caractérisé en ce qu'**il comprend des moyens de fixation (64) de l'échangeur de chaleur (36) sur la pièce adaptatrice (50).

7. Procédé de montage d'un échangeur de chaleur dans un boîtier délimité par des parois qui définissent un passage d'air, **caractérisé par** l'opérations consistant à interposer, en cas de besoin, une pièce adaptatrice (50) selon l'une des revendications 1 à 6 entre l'échangeur de chaleur (36) et les parois (18, 20, 22) du boîtier pour rattraper un écart dimensionnel.

8. Procédé de montage selon la revendication 7, **caractérisé par** les opérations suivantes :
a) prévoir des échangeurs de chaleur (24) d'un premier type et des échangeurs de chaleur (36) d'un second type conçus pour être placés indifféremment dans le boîtier (10), les échangeurs de chaleur (24) du premier type ayant un encombrement supérieur aux échangeurs de chaleur (36) du second type, dans au moins une dimension ;
b) prévoir des pièces adaptatrices (50) convenant aux échangeurs de chaleur (36) du second type pour rattraper l'écart dimensionnel avec les échangeurs de chaleur du premier type;
c) mettre en place dans le boîtier (10):
c1) soit un échangeur de chaleur (24) du premier type reçu directement dans le boîtier (10) ;
c2) soit un échangeur de chaleur (36) du second type avec interposition d'une pièce adaptatrice (50) entre l'échangeur de chaleur et le boîtier pour rattraper l'écart dimensionnel.

9. Procédé selon la revendication 8, **caractérisé en ce que** l'opération c2) comprend la mise en place de la pièce adaptatrice (50) autour de l'échangeur de chaleur (36) avant mise en place de l'ensemble dans le boîtier (10).

10. Procédé selon la revendication 8, **caractérisé en ce que** l'opération c1) comprend la mise en place de l'échangeur de chaleur (24) selon un montage en tiroir.

11. Procédé selon la revendication 8, **caractérisé en ce que** l'opération c2) comprend la mise en place de l'échangeur de chaleur (36) et de la pièce adaptatrice (50) selon un montage en tiroir.
